# EUROPÄISCHE PATENTSCHRIFT

(11) **EP 1 310 709 B1**
(45) Veröffentlichungstag und Bekanntmachung des Hinweises auf die Patenterteilung: **03.10.2007**
(21) Anmeldenummer: 02023049.6
(22) Anmeldetag: 16.10.2002
(51) Int. Cl.: F16J 15/32

(54) **Dichtungsvorrichtung mit einer elastischen Dichtung**
Sealing device with an elastic seal
Dispositif d'étanchéité comportant un joint élastique

(30) Priorität: 05.11.2001 EP 01126227
(43) Veröffentlichungstag der Anmeldung: 14.05.2003
(73) Patentinhaber: Tyco Electronics AMP GmbH, 64625 Bensheim (DE)
(72) Erfinder: Kann-Henzel, Stella, 64653 Lorsch (DE); Bauer, Hans-Joerg, 69483 Wald-Michelbach (DE); Granzow, Joerg, 64646 Heppenheim (DE)
(74) Vertreter: Grünecker, Kinkeldey, Stockmair & Schwanhäusser Anwaltssozietät

(56) Entgegenhaltungen:
- DE-U1- 9 014 523
- US-A- 5 551 705

## Beschreibung

Die vorliegende Erfindung bezieht sich auf eine Dichtungsvorrichtung mit einer elastischen Dichtung nach dem Oberbegriff des Patentanspruchs 1.

Dichtungsvorrichtungen werden in allen technischen Bereichen überall dort benötigt, wo zwei Teile, z. B. ein Gehäuse und ein Deckel, miteinander verbunden und diese Verbindung undurchlässig für Gase, Flüssigkeiten oder Partikel gemacht werden soll. Eine Möglichkeit der Abdichtung besteht in der Verwendung einer elastischen Dichtung, die üblicherweise in eine Nut des ersten Teils eingelegt wird und durch Kontakt mit dem zweiten Teil die Flüssigkeits- bzw. Gasdichtigkeit herstellt. Solche Dichtungen werden aus den verschiedensten Materialien hergestellt, je nach den Betriebsbedingungen, unter denen diese Dichtungen verwendet werden soll. Chemische Beständigkeit gegenüber dem Gas oder der Flüssigkeit, gegen die abgedichtet werden soll, Wärmebeständigkeit, Elastizität und die Alterungsbeständigkeit gehören zu den wichtigen Faktoren, die bei der Auswahl des Material berücksichtigt werden müssen.

Eine Dichtungsvorrichtung, die eine solche elastische Dichtung mit einem optimierten Dichtungsquerschnitt vorschlägt, ist aus der US-Patentschrift 5,551,705 bekannt ist. Die darin offenbarte Dichtungsanordnung enthält eine elastische Dichtung mit zwei vorspringenden Wülsten, die sich beim Aufpressen des planen zweiten Teils gegeneinander neigen, so dass der Querschnitt der zusammengepressten elastischen Dichtung nur mehr einen zusammenhängenden Wulst mit erhöhter Steifigkeit aufweist. Weitere ähnliche Dichtungsvorrichtungen sind beispielsweise aus den US-Patentschriften 3,768,819; 2,862,261; 3,831,950 und 4,868,957 bekannt.

Solche Dichtungsvorrichtungen nach dem Stand der Technik weisen jedoch den Nachteil auf, dass die dichtende Anlagefläche zwischen der elastischen Dichtung und dem zweiten Teil sich im wesentlichen nur in einer Ebene befindet und auf diese Weise, z. B. gegenüber einem Wasserstrahl bei erhöhter Temperatur keine ausreichende Dichtigkeit gewährleistet. Dies ist insbesondere bei Komponenten aus dem Kraftfahrzeugbereich, z. B. bei Energieverteilern, Fremdstartdosen oder Abzweigdosen, von großer Bedeutung.

Aus der deutschen Gebrauchsmusterschrift DE 90 14 523 U1 ist eine Dichtvorrichtung bekannt, bei der eine elastische Dichtung, die an einem ersten Teil angeordnet ist, eine Nut aufweist, in welche ein Steg, der an einem zweiten Teil angeordnet ist und zueinander parallele Seitenwände besitzt, eintaucht.

Der vorliegenden Erfindung liegt daher die Aufgabe zugrunde, eine Dichtungsvorrichtung mit einer elastischen Dichtung anzugeben, bei der eine verbesserte Abdichtung auch unter rauen Umweltbedingungen gewährleistet ist.

Diese Aufgabe wird durch eine Dichtungsvorrichtung mit den Merkmalen des Patentanspruchs 1 gelöst. Vorteilhafte Weiterbildungen der Erfindung sind Gegenstand mehrerer Unteransprüche.

Der Erfindung liegt die Erkenntnis zugrunde, dass eine Abdichtung, insbesondere gegenüber seitlich und unter hohem Druck oder bei erhöhter Temperatur eindringenden Gasen oder Flüssigkeiten, dann besonders effektiv erfolgen kann, wenn das zweite Teil in seinem Querschnitt so ausgebildet ist, dass es an das Profil der elastischen Dichtung, die eine Einkerbung aufweist, angepasst ist. Bei einer solchen Ausgestaltung können in vorteilhafter Weise die Anpresskräfte zwischen der Dichtung und dem zweiten Teil nicht nur ausschließlich parallel zu der Anpressrichtung, sondern auch teilweise in lateraler Richtung wirken. Die erfindungsgemäße Lösung hat außerdem den Vorteil, dass der Kontakt zwischen zweitem Teil und elastischer Dichtung auf einer wesentlich größeren Fläche erfolgt. Eventuelle Abweichungen aufgrund der Fertigungstoleranzen können so leichter kompensiert werden.

Eine besonders gute Anpassung der Geometrie von elastischer Dichtung und zweitem Teil erreicht man, indem an dem zweiten Teil ein Steg vorgesehen wird, der zumindest teilweise in die Einkerbung der Dichtung eintaucht und mit den Seitenwänden der Einkerbung in Anlage ist, wenn das erste und zweite Teil dichtend miteinander verbunden sind.

Führt man die Einkerbung der Dichtung U-förmig aus und den Steg mit einem V-förmigen Querschnitt, so dass der Winkel, den die Seitenwände des Stegs jeweils mit einer durch die Richtung des Zusammenfügens definierten Achse einschließen, größer ist als der Winkel, den die Seitenwände der Einkerbung mit dieser Achse einschließen, ist gewährleistet, dass sich die elastische Dichtung durch den Kontakt mit dem Steg verformt und in dichtender Anlage mit diesem ist, wenn die beiden Teile miteinander verbunden sind.

Gemäß einer vorteilhaften Weiterbildung der Erfindung weist die Dichtung in ihrem Profil mindestens eine weitere Einkerbung, die in einem dem Boden der Nut zugewandten Bereich des Dichtungsprofils angeordnet ist, auf. Auf diese Weise wird beim Zusammenpressen der Dichtung ein Bereich mit hoher Steifigkeit, der eine besonders gute Abdichtung zu der Nut hin gewährleistet, erzeugt.

Führt man die Dichtung so aus, dass ihr Profil im wesentlichen die Gestalt zweier nierenförmiger Lappen aufweist, die über einen Verbindungssteg zusammenhängen, und dass sich ein tiefster Punkt der Einkerbung über diesen Verbindungssteg befindet, kann eine besonders gute Anpressung und damit effektive Abdichtung gegenüber der Nut erreicht werden.

Um einerseits besonders kritische Bereiche noch stärker abzudichten, und andererseits in weniger kritischen Bereichen Material zu sparen, kann die Dichtung als eine Schnurdichtung ausgeführt sein und Bereiche mit unterschiedlichen Profilen aufweisen.

Eine besonders effektive und leicht herstellbare Verstärkung der Dichtung erhält man, indem man in den stärker beanspruchten Bereichen ein Grundprofil aus weniger stark beanspruchten Bereichen mindestens zweimal aneinanderfügt.

Die vorteilhaften Eigenschaften der erfindungsgemäßen Dichtungsvorrichtung lassen sich besonders wirkungsvoll bei einer Abzweigdose einsetzen, wobei das erste Teil ein Deckel der Abzweigdose und das zweite Teil ein Gehäuse dieser Abzweigdose ist.

Besonders gute Eigenschaften bezüglich Formstabilität, thermischer Belastbarkeit, chemische Resistenz und Alterungsbeständigkeit erhält die Dichtung, wenn sie aus Silikonkautschuk hergestellt ist.

Anhand der in den beiliegenden Zeichnungen dargestellten Ausgestaltungen wird die Erfindung im folgenden näher erläutert. Ähnliche oder korrespondierende Einzelheiten der erfindungsgemäßen Dichtungsvorrichtung sind in den Figuren mit denselben Bezugszeichen versehen. Es zeigen:
- **Figur 1**: eine Draufsicht auf eine Abzweigdose mit einer Dichtungsvorrichtung gemäß der vorliegenden Erfindung in einer ersten Ausführungsform;
- **Figur 2**: einen Schnitt durch die Abzeigdose entlang Schnittlinie N-N gemäß Figur 1 ;
- **Figur 3**: eine Detailansicht W gemäß Figur 2 mit einem Schnitt durch die Dichtungsvorrichtung in einem ersten Bereich;
- **Figur 4**: eine Detailansicht X gemäß Figur 2 mit einem Schnitt durch die Dichtungsvorrichtung in einem zweiten Bereich;
- **Figur 5**: eine Detailansicht Y gemäß Figur 2 mit einem vergrößerten Schnitt durch die Dichtungsvorrichtung im ersten Bereich;
- **Figur 6**: eine Detailansicht Z gemäß Figur 2 mit einem vergrößerten Schnitt durch die Dichtungsvorrichtung in einem zweiten Bereich;
- **Figur 7**: eine Ansicht von unten auf eine elastische Dichtung gemäß einer ersten Ausführungsform;
- **Figur 8**: eine Seitenansicht der elastischen Dichtung gemäß der ersten Ausführungsform;
- **Figur 9**: eine Draufsicht auf die elastische Dichtung gemäß der ersten Ausführungsform;
- **Figur 10**: einen Schnitt durch die elastische Dichtung gemäß der ersten Ausführungsform entlang Schnittlinie A-A gemäß Figur 7;
- **Figur 11**: eine Detailansicht V durch einen ersten Bereich der elastischen Dichtung gemäß Figur 10;
- **Figur 12**: einen Schnitt durch die elastische Dichtung gemäß der ersten Ausführungsform entlang Schnittlinie B-B gemäß Figur 7;
- **Figur 13**: eine perspektivische Darstellung der Unterseite der Dichtung gemäß der ersten Ausführungsform;
- **Figur 14**: eine perspektivische Darstellung der Oberseite der elastischen Dichtung gemäß der ersten Ausführungsform;
- **Figur 15**: einen Schnitt durch eine elastische Dichtung gemäß einer zweiten Ausführungsform entlang der Schnittlinie B-B gemäß Figur 16;
- **Figur 16**: eine Draufsicht auf eine elastische Dichtung gemäß einer zweiten Ausführungsform;
- **Figur 17**: ein Detail C mit einem Schnitt durch die elastische Dichtung gemäß Figur 15;
- **Figur 18**: eine perspektivische Darstellung der elastischen Dichtung gemäß der zweiten Ausführungsform.

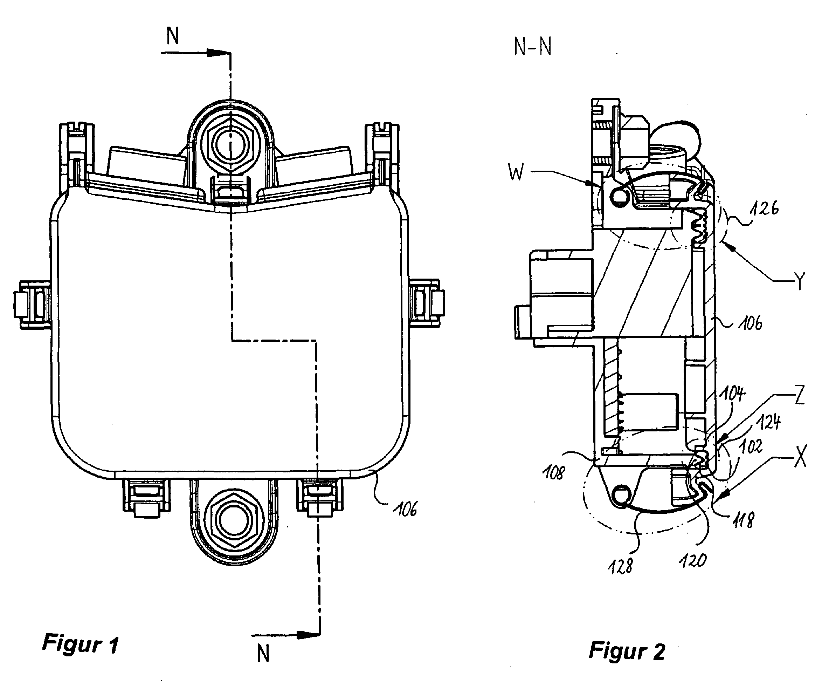

In Figur 1 ist als Anwendungsbeispiel für die erfindungsgemäße Dichtungsvorrichtung eine Abzweigdose gezeigt, bei der die Dichtungsvorrichtung gemäß einer ersten Ausführungsform realisiert wurde.

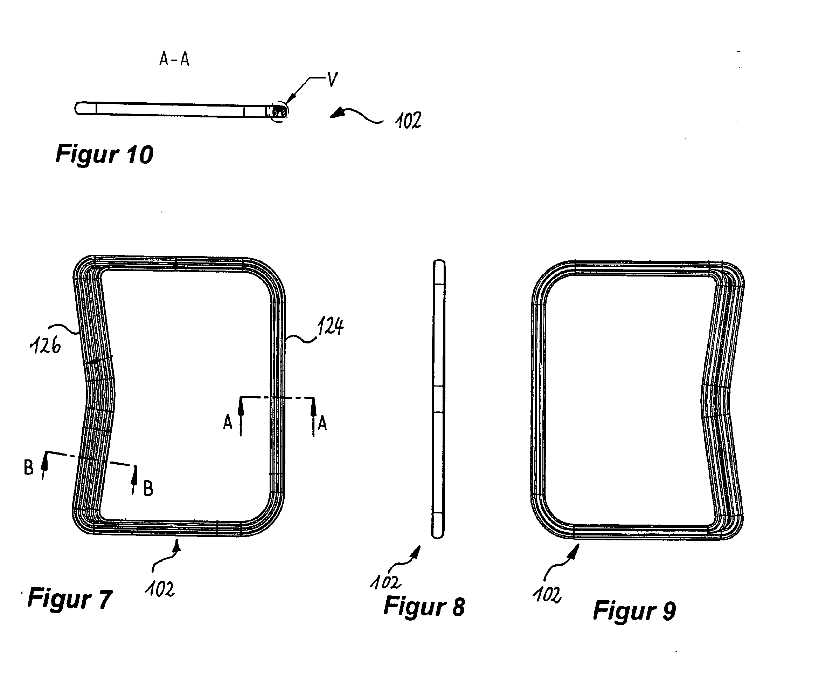

Figur 2 zeigt einen Schnitt durch die Abzweigdose entlang der Schnittlinie N-N gemäß Figur 1. Die Abzweigdose umfasst ein Gehäuse 108, in welchem unter anderem elektronische Komponenten untergebracht sind. Damit die in dem Gehäuse befindlichen Komponenten gegenüber Umwelteinfluss geschützt sind, wird das Gehäuse mit einem Deckel 106 geschlossen. Mit Hilfe der elastischen Dichtung 102 werden Gehäuse 108 und Deckel 106 dichtend miteinander verbunden. Dabei ist die Dichtung 102 in eine im Deckel 106 befindliche Nut 104 eingelegt. Wie insbesondere aus den Figuren 7 bis 9 noch deutlicher erkennbar, weist die Dichtung 102 zwei Bereiche mit unterschiedlichem Profil auf. In einem ersten Bereich 124 weist die Dichtung 102 eine Einkerbung 118 auf, in die beim Aufdrücken des Deckels 106 auf das Gehäuse 108 ein an dem Gehäuse 108 angeordneter Steg 120 eingedrückt wird. In einem zweiten Bereich 126 ist das Profil der Dichtung 102 verbreitert, so dass es zwei Einkerbungen aufweist, in die jeweils einer von zwei Stegen am Gehäuse eintaucht. Der für eine abdichtende Verbindung zwischen dem Gehäuse 108 und dem Deckel 106 erforderliche Anpressdruck wird über federelastische Klammern 128 gewährleistet.

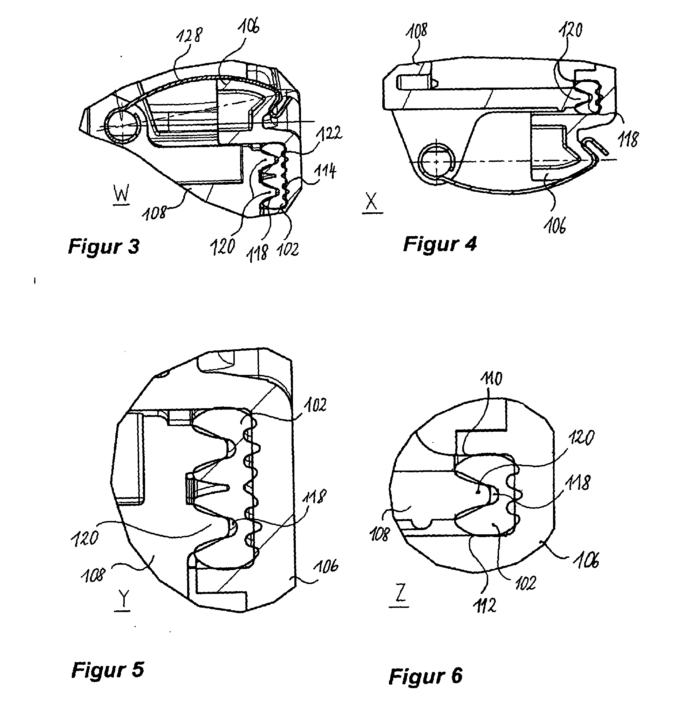

Figur 3 zeigt das Detail W mit einem Bereich 126 der Dichtung 102. In diesem Bereich weist das Profil der Dichtung 102 zwei Einkerbungen 118 auf. Um an das Profil der Dichtung 102 angepasst zu sein, weist der Deckel 108 hier zwei Stege 120 auf, die so angeordnet sind, dass sie beim Schließen des Deckels passgenau in die Einkerbungen 118 eintauchen. Auf der dem Boden 114 der Nut 104 zugewandten Seite weist die Dichtung außerdem fünf weitere Einkerbungen 122 auf, die für eine gute Abdichtung gegenüber der Nut 104 sorgen.

In Figur 4 (Detailansicht X aus Figur 2) ist vergrößert der Bereich 124 der Dichtung 102 gezeigt, in dem die Dichtung eine Einkerbung in Richtung auf das Gehäuse 108 aufweist. Dementsprechend ist in diesem Bereich ein Steg 120 an dem Gehäuse 108 vorgesehen, der in seinem Querschnitt an das Profil der elastischen Dichtung angepasst ist.

Die Figuren 5 und 6 zeigen als Detailansichten Y und Z die Bereiche der Figuren 3 und 4 nochmals vergrößert. Deutlich erkennbar wird, dass der Steg 120 einen breiteren Öffnungswinkel aufweist, als das Profil der Einkerbung 118. Auf diese Weise wird erreicht, dass beim Zusammenpressen von Deckel 106 und Gehäuse 108 ausreichende Druckkräfte von den Seitenwänden des Stegs 140 auf die Seitenwände der Einkerbung 118 ausgeübt werden und damit eine möglichst große Fläche in abdichtender Anlage ist. Die in Richtung auf die Seitenwände 110 und 112 der Nut 104 verrundeten Umrisse des Dichtungsprofils gewährleisten eine optimale Abdichtung zur Nut 104.

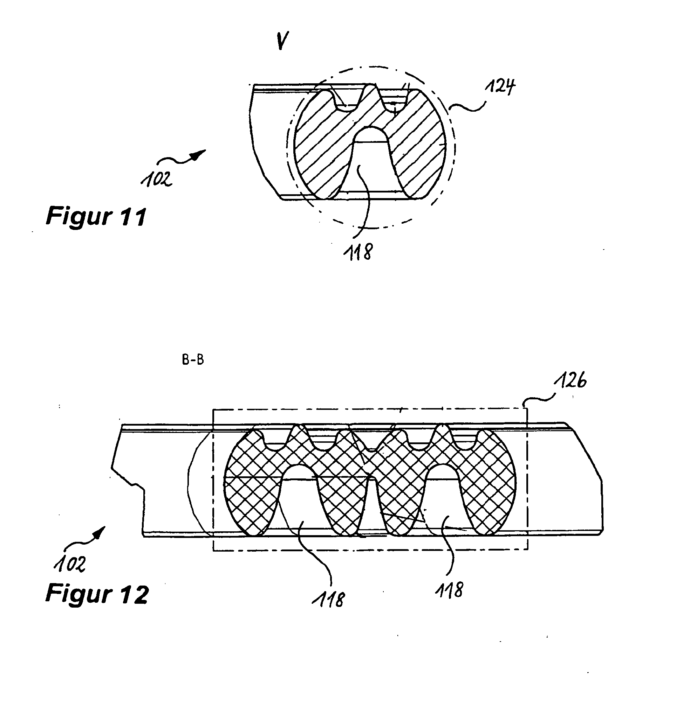

In den Figuren 7 bis 10 ist die elastische Dichtung 102 in verschiedenen Ansichten dargestellt. Gemäß dieser Ausführungsform weist die Dichtung zwei Bereiche 124 und 126 mit unterschiedlichen Profilen auf. Wie aus den Figuren 11 und 12 noch deutlicher erkennbar, stellt dabei das Profil der Dichtung 102 im Bereich 126 im wesentlichen eine Verdoppelung des Profils im Bereich 124 dar. Die Dichtung 102, die vorzugsweise aus Silikonkautschuk hergestellt ist, weist, wie aus den Seitenansichten der Figuren 8 und 10 ersichtlich, eine plane Form auf. So ist sie besonders dazu geeignet, in einer Dichtungsvorrichtung eingesetzt zu werden, die im wesentlichen in einer Ebene verläuft.

In den Figuren 11 und 12 sind vergrößert die Dichtungsprofile in den Bereichen 124 und 125 dargestellt. Das Profil der Dichtung 102 weist im Bereich 124 im wesentlichen die Gestalt zweier nierenförmiger Lappen auf, die über einen Verbindungssteg zusammenhängen. Der tiefste Punkt der Einkerbung 118 befindet sich an diesem Verbindungssteg. Auf der beim Einbau der Nut zugewandten Seite der Dichtung 102 befindet sich eine Ausbuchtung an dem Verbindungssteg. Durch Aneinanderfügen zweier solcher Grundprofile erhält man das in Figur 12 gezeigte Profil des Bereichs 126.

Hier sind zwei Einkerbungen 118 vorgesehen und die beiden Grundprofile sind über einen weiteren Verbindungssteg miteinander verbunden.

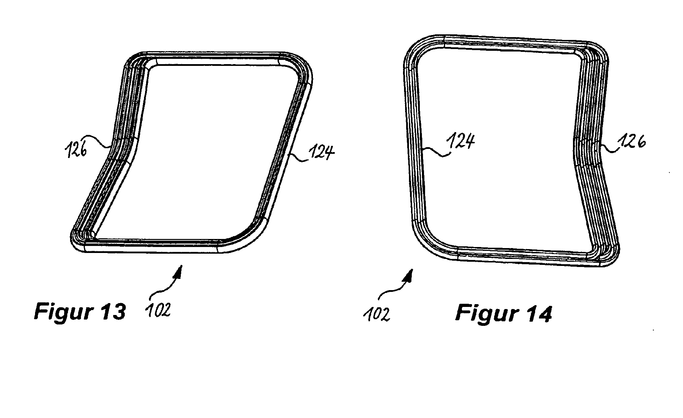

Die Figuren 13 und 14 zeigen die Dichtung 102 gemäß der ersten bevorzugten Ausführungsform entsprechend den Ansichten der Figuren 7 und 9 in perspektivischer Darstellung.

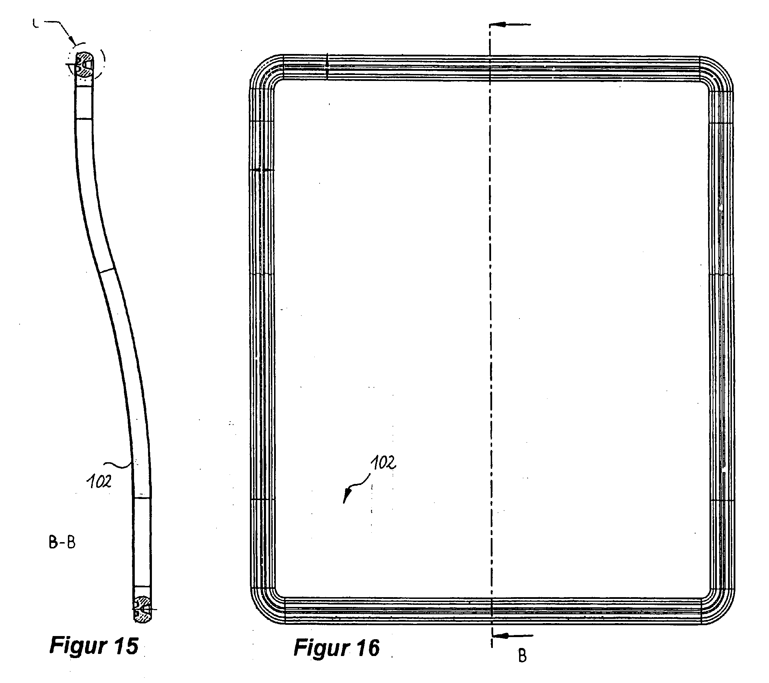

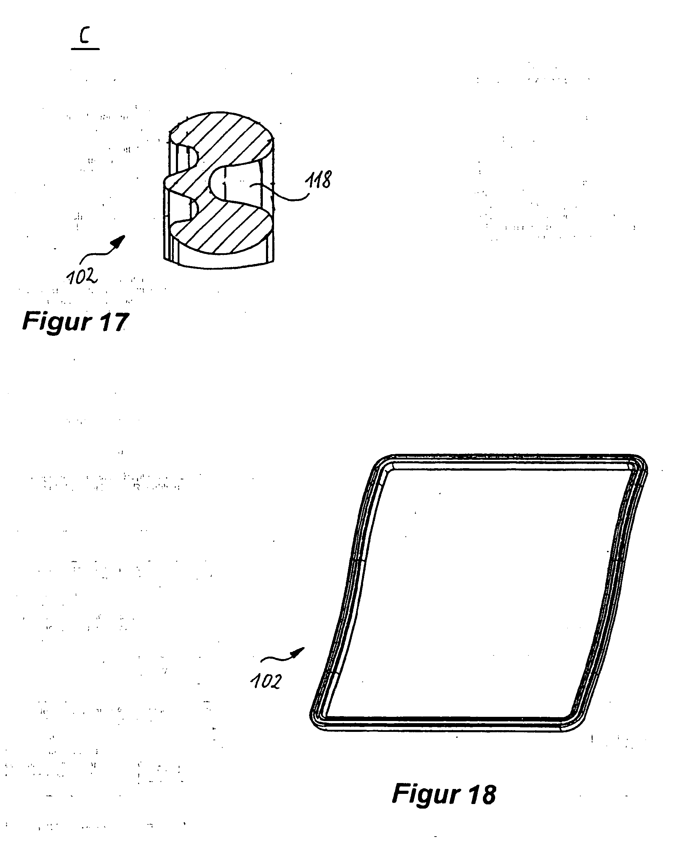

Eine weitere mögliche Ausführungsform der Dichtung 102 ist in den Figuren 15 bis 18 gezeigt: hier weist die Dichtung umlaufend ein und dasselbe Profil, wie in der Detailansicht C der Figur 17 gezeigt, auf. Um an eine Dichtungsvorrichtung, die nicht umlaufend in ein und derselben Ebene angeordnet ist, angepasst zu sein, hat die Dichtung, wie in der Seitenansicht der Figur 15 erkennbar, eine gebogene Gestalt.

Obwohl die erfindungsgemäße Dichtungsvorrichtung im Vorangegangenen am Anwendungsbeispiel einer Abzweigdose erläutert wurde, kann diese Art von Dichtungsvorrichtung in den verschiedenartigsten Anwendungen eingesetzt werden. Insbesondere in Fällen, in denen ein Gehäuse lichtdicht mit einem Deckel verschlossen werden soll, wie dies in den verschiedenen Gebieten der Optoelektronik oder Sensorik erforderlich ist, findet diese Erfindung ein weitgefächertes Verwendungsfeld.

## Patentansprüche

1. Dichtungsvorrichtung mit einer elastischen Dichtung (102), die in einer Nut (104) eines ersten Teils (106), das mit einem zweiten Teil (108) über die Dichtung (102) in dichtender Anlage ist, angeordnet ist, wobei
die Nut (104) Seitenwände (110, 112), einen Boden (114) und eine Öffnung (116) aufweist und an einer Oberfläche des ersten Teils (106) so angebracht ist, dass die Öffnung (116) dem zweiten Teil (108) gegenüberliegt,
die Dichtung (102) in ihrem Profil mindestens eine Einkerbung (118), die dem zweiten Teil (108) gegenüberliegt, aufweist,
wobei das zweite Teil (108) so ausgebildet ist, dass es in seinem Profil in einem der Nut (104) des ersten Teils (106) gegenüberstehenden Bereich an das Profil der Dichtung (102) angepasst ist, und das zweite Teil (108) mindestens einen Steg (120) aufweist, der zumindest teilweise in die Einkerbung (118) der Dichtung (102) eintaucht und mit den Seitenwänden der Einkerbung (118) in Anlage ist, wenn das erste (106) und das zweite Teil (108) dichtend miteinander verbunden sind,
**dadurch gekennzeichnet,**
**dass** die Einkerbung (118) der Dichtung (102) U-förmig ist und der Steg (120) einen V-förmigen Querschnitt aufweist, so dass der Winkel, den die Seitenwände des Stegs (120) jeweils mit einer durch die Richtung des Zusammenfügens definierten Achse einschließen, größer ist als der Winkel, den die Seitenwände der Einkerbung (118) mit dieser Achse einschließen.

2. Dichtungsvorrichtung nach einem der Anspruch 1, **dadurch gekennzeichnet, dass** die Dichtung (102) in ihrem Profil mindestens eine weitere Einkerbung (122), die in einem dem Boden (114) der Nut (104) zugewandten Bereich des Dichtungsprofils angeordnet ist, aufweist.

3. Dichtungsvorrichtung nach Anspruch 2, **dadurch gekennzeichnet, dass** die Tiefe der Einkerbung (118) zu der Tiefe der weiteren Einkerbung (122) in einem Verhältnis von 2:1 bis 4:1, vorzugsweise 3,25:1, steht.

4. Dichtungsvorrichtung nach einem der Ansprüche 1 bis 3, **dadurch gekennzeichnet, dass** das Profil der Dichtung (102) im wesentlichen die Gestalt zweier nierenförmiger Lappen aufweist, die über einen Verbindungssteg zusammenhängen, und dass sich ein tiefster Punkt der Einkerbung (118) über diesem Verbindungssteg befindet.

5. Dichtungsvorrichtung nach Anspruch 4, **dadurch gekennzeichnet, dass** gegenüber dem tiefsten Punkt der Einkerbung (118) in dem dem Boden (114) der Nut (104) zugewandten Bereich des Dichtungsprofils eine Ausbuchtung in Richtung auf den Boden (114) der Nut (104) angeordnet ist.

6. Dichtungsvorrichtung nach einem der Ansprüche 1 bis 5, **dadurch gekennzeichnet, dass** die Dichtung (102) eine Schnurdichtung ist und Bereiche mit unterschiedlichen Profilen aufweist.

7. Dichtungsvorrichtung nach Anspruch 6, **dadurch gekennzeichnet, dass** das Profil der Dichtung in einem Bereich durch Aneinanderfügen von mindestens zwei Profilen eines anderen Bereichs gebildet ist.

8. Dichtungsvorrichtung nach einem der Ansprüche 1 bis 7, **dadurch gekennzeichnet, dass** das erste Teil (106) ein Deckel einer Abzweigdose und das zweite Teil (108) ein Gehäuse dieser Abzweigdose ist.

9. Dichtungsvorrichtung nach einem der Ansprüche 1 bis 8, **dadurch gekennzeichnet, dass** die Dichtung (102) aus Silicon-Kautschuk hergestellt ist.

## Claims

1. Sealing device with a resilient seal (102), which is arranged in a groove (104) in a first section (106), which is sealed to a second section (108) via the seal (102),
the groove (104) having sidewalls (110, 112), a base (114) and an opening (116), and being joined to a surface of the first section (106) so that the opening (116) faces the second section (108),
the seal (102) having in its profile at least one indentation (118) which faces the second section (108),
the second section (108) being designed so that its profile, in an area facing the groove (104) in the first section (106), is adapted to the profile of the seal (102), and the second section (108) having at least one web (120), which dips at least partly into the indentation (118) in the seal (102) and abuts the sidewalls of the indentation (118) when the first portion (106) and the second portion (108) are sealed together,
**characterised in that**
the indentation (118) in the seal (102) is U-shaped and the web (120) has a V-shaped cross section, so that the angle, which the sidewalls of the web (120) each encompass with an axis defined by the direction of the join, is greater than the angle, which the sidewalls of the indentation (118) encompass with said axis.

2. Sealing device according to claim 1, **characterised in that** the seal (102) has in its profile at least one further indentation which is arranged in an area of the seal profile facing the base (114) of the groove (104).

3. Sealing device according to claim 2, **characterised in that** the ratio of the depth of the indentation (118) to the depth of the further indentation (122) is from 2:1 to 4:1, preferably 3.25:1.

4. Sealing device according to any one of claims 1 to 3, **characterised in that** the profile of the seal (102) has substantially the shape of two reniform tabs, which are joined together via a connecting web, and **in that** a lowest point of the indentation (118) is arranged over this connecting web.

5. Sealing device according to claim 4, **characterised in that**, a bulge toward the base (114) of the groove (104) is arranged facing the lowest point of the indentation (118) in the region of the seal profile facing the base (114) of the groove (104).

6. Sealing device according to any one of claims 1 to 5, **characterised in that** the seal (102) is a cord seal and has areas with different profiles.

7. Sealing device according to claim 6, **characterised in that** the profile of the seal in one area is formed by the joining-together of at least two other profiles from another area.

8. Sealing device according to any one of claims 1 to 7, **characterised in that** the first section (106) is a cover of a junction box and the second section (108) houses said junction box.

9. Sealing device according to any one of claims 1 to 8, **characterised in that** the seal (102) is made of silicone rubber.

## Revendications

1. Dispositif d'étanchéité comportant un joint élastique (102) situé dans une rainure (104) d'une première partie (106) en contact étanche avec une deuxième partie (108) par le biais du joint d'étanchéité (102),
la rainure (104) comprenant des parois latérales (110, 112), un fond (114) et une ouverture (116) et étant disposée sur une surface de la première partie (106) de manière à ce que l'ouverture (116) se trouve face à la deuxième partie (108),
le joint d'étanchéité (102) étant pourvu, dans son profil, d'au moins une échancrure (118) faisant face à la deuxième partie (108),
la deuxième partie (108) étant formée de manière à être adaptée, dans son profil, au profil du joint d'étanchéité (102) dans une zone faisant face à la rainure (104) de la première partie (106) et la deuxième partie (108) étant pourvue d'au moins une traverse (120) qui s'enfonce, au moins partiellement, dans l'échancrure (118) du joint d'étanchéité (102) et est en contact avec les parois latérales de l'échancrure (118) lorsque la première (106) et la deuxième (108) parties sont reliées l'une à l'autre de manière étanche,
**caractérisé par le fait**
**que** l'échancrure (118) du joint d'étanchéité (102) a une forme en U et la traverse (120) a une section transversale en forme de V de manière à ce que l'angle que forment à chaque fois les parois latérales de la traverse (120) avec un axe défini par la direction de l'assemblage soit supérieur à l'angle que forment les parois latérales de l'échancrure (118) avec cet axe.

2. Dispositif d'étanchéité selon la revendication 1, **caractérisé par le fait que** le joint d'étanchéité (102) est pourvu, dans son profil, d'au moins une autre échancrure (122) située dans une zone du profil du joint d'étanchéité tournée vers le fond (114) de la rainure (104).

3. Dispositif d'étanchéité selon la revendication 2, **caractérisé par le fait que** le rapport entre la profondeur de l'échancrure (118) et la profondeur de l'autre échancrure (122) est compris entre 2:1 et 4:1, et est de préférence égal à 3,25:1.

4. Dispositif d'étanchéité selon l'une des revendications 1 à 3, **caractérisé par le fait que** le profil du joint d'étanchéité (102) a essentiellement la forme de deux lobes réniformes qui sont mis en relation par le biais d'une traverse et **par le fait que** le point le plus profond de l'échancrure (118) se trouve sur cette traverse.

5. Dispositif d'étanchéité selon la revendication 4, **caractérisé par le fait qu'**un renflement dirigé vers le fond (114) de la rainure (104) est situé en face du point le plus profond de l'échancrure (118) dans la zone du profil du joint d'étanchéité tournée vers le fond (114) de la rainure (104)

6. Dispositif d'étanchéité selon l'une des revendications 1 à 5, **caractérisé par le fait que** le joint d'étanchéité (102) est un joint d'étanchéité cordon et comporte des zones dotées de différents profils.

7. Dispositif d'étanchéité selon la revendication 6, **caractérisé par le fait que** le profil du joint d'étanchéité est formé, dans une zone, par la jonction d'au moins deux profils d'une autre zone.

8. Dispositif d'étanchéité selon l'une des revendications 1 à 7, **caractérisé par le fait que** la première partie (106) est un couvercle d'une boîte de dérivation et la deuxième partie (108) est un boîtier de cette boîte de dérivation.

9. Dispositif d'étanchéité selon l'une des revendications 1 à 8, **caractérisé par le fait que** joint d'étanchéité (102) est fabriqué en caoutchouc silicone.
